# EUROPÄISCHE PATENTSCHRIFT

(11) **EP 2 485 969 B1**
(45) Veröffentlichungstag und Bekanntmachung des Hinweises auf die Patenterteilung: **27.01.2016**
(21) Anmeldenummer: 10752756.6
(22) Anmeldetag: 01.09.2010
(51) Int. Cl.: B65G 1/04

(54) **SHUTTLE-KANALLAGER, SHUTTLE-BAHNHOF UND VERFAHREN ZUM BETREIBEN DES LAGERS**
SHUTTLE-WAREHOUSE, SHUTTLE STATION AND METHOD FOR OPERATING THE WAREHOUSE
MAGASIN DE STOCKAGE À NAVETTES, STATION DE NAVETTES ET PROCÉDÉ POUR FAIRE FONCTIONNER LE MAGASIN

(30) Priorität: 09.10.2009 DE 102009049563
(43) Veröffentlichungstag der Anmeldung: 15.08.2012
(73) Patentinhaber: SSI Schäfer AG, 8213 Neunkirch (CH)
(72) Erfinder: REICHMUTH, Benno, CH-8400 Winterthur (CH); FELBER, Bruno, CH-6285 Hitzkirch (CH)
(74) Vertreter: Witte, Weller & Partner Patentanwälte mbB
(86) Internationale Anmeldenummer: PCT/EP2010/062825
(87) Internationale Veröffentlichungsnummer: WO 2011/042265

(56) Entgegenhaltungen:
- WO-A2-02/32794
- DE-U1- 9 301 506
- FR-A1- 2 444 309

## Beschreibung

Die vorliegende Erfindung betrifft ein Shuttle-Kanallager und insbesondere eine Vorrichtung, die es erlaubt, regalgebundene Kanalfahrzeuge, so genannte Shuttle, sicher zwischen verschiedenen Kanälen des Kanallagers umzusetzen. Ferner betrifft die vorliegende Erfindung ein Verfahren zum sicheren Bereitstellen eines Shuttles in verschiedenen Kanälen.

Die deutsche Patentanmeldung DE 22 64 165 A offenbart eine Lagerbeschickungsanlage für mindestens ein Lagerniveau, mit mindestens einer Gerüstkonstruktion mit einer Anzahl nebeneinander liegender, mit Schienen versehener Lagergänge, je einem rechtwinklig zu diesem liegenden Einlaufgang sowie Auslaufgang sowie mindestens einem elektrisch steuerbaren flachen Transportwagen, der auf Schienen in beiden Richtungen verschiebbar ist und dessen Auflagefläche eine hohe Transportstellung einnehmen kann und eine niedere Stellung für den freien Durchlauf unter Lasten, wobei je ein Transportwagen für mehrere Lagergänge am Einlaufgang und Auslaufgang vorgesehen ist, die jeweils mit einer Ladevorrichtung und mit einer Einrichtung zum Einführen des Transportwagens in einen Lagergang versehen sind, mit einem an jeder Lagervorrichtung angebrachten Tragelement, und mit einem elektrischen Verbindungskabel zwischen der Ladevorrichtung und dem Transportwagen, das auf eine in demselben befindliche Kabeltrommel aufwickelbar ist.

Ein herkömmliches Kanallager ist in der DE 38 40 648 A1 gezeigt. Ein Regelbediengerät für ein Kanallager ist in der US 3,800,963 gezeigt.

Shuttle-Kanallager gehören systematisch zu den so genannten Kompakt-Lagern bzw. Kanallagern. Ladungsträger, wie z.B. Paletten oder Tablare, werden auf Schienen stehend hintereinander in Kanälen gelagert. In einem Regalkanal stehen üblicherweise zwei oder mehr Lagereinheiten bestehend aus Ladungsträger(n) und Artikel hintereinander. In bzw. entlang der Regalschienen kann eine entsprechend flache Verfahreinheit (Shuttle) die Ladungsträger unterfahren und nach einem Anheben in Längsrichtung des Kanals transportieren, um so Einlagerungen und Auslagerungen vorzunehmen. Das Shuttle gelangt üblicherweise über ein Regalförderzeug (Regalbediengerät, Stapler, etc.) mit einer entsprechend angepassten Aufnahmevorrichtung in einen Kanal.

Das Verbringen der Shuttle in die Kanäle gestaltet sich schwierig. Anfänglich wurden Z-förmige Regalschienen verwendet, wobei die Ladungsträger im oberen horizontalen, nach außen kragenden Abschnitt abgestellt wurden und wobei Laufrollen der Shuttle auf einem unteren, zum Kanalinneren vorstehenden Abschnitt gelaufen sind. Um die Shuttle z.B. mit einem Stapler von der Regalfront aus in die Kanäle einheben zu können, musste der lichte Abstand zwischen den Regalschienen ausreichend groß gewählt werden, damit die Bedienperson des Staplers das Shuttle auch tatsächlich in den Kanal einfahren und absenken konnte. Dieser relativ große lichte Abstand zwischen den Schienen barg die Gefahr, dass das Shuttle verdreht relativ zu den Schienen in den Kanal eingehoben wird, so dass das Shuttle verkantet und schlimmstenfalls blockiert. Deshalb wurden im Stand der Technik auch C-förmige Laufschienen vorgeschlagen, die in Richtung der Kanalmitte geöffnet waren und geringe lichte Abstände relativ zueinander erlaubten. Am stirnseitigen Ende des Kanals hatten diese C-förmigen Schienen Ausnehmungen im oberen Bereich des C-Profils aufgewiesen, die ungefähr die Breite der Laufrollen hatten.

Das europäische Patent EP 1 554 198 schlägt alternativ eine Regalschiene vor, die eine horizontal orientierte Abstellfläche sowie eine horizontal orientierte Lauffläche aufweist, die über eine schräg verlaufende Seitenwand miteinander verbunden sind. Zwei sich gegenüberliegende derartige Laufschienen verjüngen sich von oben nach unten und bilden so eine trichterförmig ausgebildete Verfahrebene. Die trichterförmige Ausgestaltung erleichtert das Einheben des Shuttles von oben in den Kanal erheblich.

Ein weiteres Problem, das sich im Zusammenhang mit Shuttle, insbesondere unabhängig agierenden Shuttle, ergibt, ist die Gefahr, dass ein Shuttle ein Kanalende überfährt und somit aus dem Kanal herunterfällt.

Des Weiteren sind Bedienpersonen im Lager gefährdet, wenn sie sich in Kanäle begeben, in denen automatisierte Shuttle arbeiten. Hier besteht eine erhebliche Verletzungsgefahr. Dieses Problem ist jedoch bei Shuttle geringer, die nicht autark betrieben werden. So sind im Stand der Technik Shuttlefahrzeuge bekannt, die zum Zwecke einer Steuerung und Energieversorgung permanent über ein Kabel mit einem Regalförderzeug verbunden sind.
Das Dokument FR 2 444 309 A offenbart eine Vorrichtung zum Kommunizieren von Informationen zwischen einem beweglichen Fahrzeug, das in das Regal eindringt, und einer Referenzstation. Das Dokument WO 2002/032794 A2 offenbart eine Transferhubvorrichtung für ein Fördersystem. Das Dokument DE 93 01 506 U1 offenbart ein Hochregallager für Container.

Es ist daher eine Aufgabe der vorliegenden Erfindung, einen Shuttle-Bahnhof, ein Shuttle-Kanallager und ein Verfahren zum Betreiben desselben vorzusehen, wobei die oben genannten Nachteile überwunden werden. Insbesondere sollen im Lager arbeitende Bedienpersonen vor Verletzungen von automatisiert betriebenen Shuttles geschützt werden. Weiter ist es wünschenswert, dass die Shuttle einfach, sicher und zuverlässig zwischen verschiedenen Kanälen umgesetzt werden können.

Diese Aufgabe wird mit einem Shuttle-Bahnhof für ein Shuttle in einem Shuttle- Kanallager nach Anspruch 1 gelöst.

Der erfindungsgemäße Shuttle-Bahnhof lässt sich einfach in einen Übergabeplatz in einem Regal einschieben oder einhängen. Der Übergabeplatz unterscheidet sich nicht von herkömmlichen Kanalenden, d.h. ein Kanalende muss nicht speziell an den Shuttle-Bahnhof (mechanisch) angepasst werden. Der Shuttle-Bahnhof kann ohne Probleme in bereits existierenden Kompaktlagern eingesetzt werden. Der Shuttle-Bahnhof lässt sich einfach in die Schienen von bereits existierenden Kanalenden einschieben oder einsetzen.

Ein Transport des Shuttle-Bahnhofs zwischen verschiedenen Kanalenden ist sicher. Das Shuttle sitzt in einer Transportstellung des Shuttle-Bahnhofs gesichert auf dem Hubtisch. Es kann nicht herunterfallen. Das Shuttle kann auch nicht vorzeitig in einen Kanal einfahren, solange der Shuttle-Bahnhof nicht vollständig im Übergabeplatz sitzt. Erst wenn die Lastaufnahmemittel eines Regalbediengeräts den Shuttle-Bahnhof vollständig abgesetzt haben, löst sich das Shuttle vom Hubtisch und gibt somit das Shuttle frei.

Der Hubtisch des Shuttle-Bahnhofs ist auf einfache Weise beweglich am Gestell des Shuttle-Bahnhofs befestigt. Der Hubtisch lässt sich mit Hilfe des Lastaufnahmemittels des Regalbediengeräts bis zu einem vorgegebenen Grad in vertikaler Richtung relativ zum Gestell bewegen. Dafür sind keine zusätzlichen Hubeinrichtungen erforderlich. Man nutzt das Hubmittel des Lastaufnahmemittels des Regalbediengeräts.

Der Hubtisch und das Gestell sind verliersicher gegeneinander gesichert. Sie bilden eine Einheit. Diese Einheit kann zum Beispiel durch Lösen von Querträgern des Hubtischs zu Wartungszwecken getrennt werden.

Der erfindungsgemäße Shuttle-Bahnhof zeichnet sich durch eine besonders einfache Handhabung für die Bedienpersonen der Regalbediengeräte aus. Er ist gut einsehbar, insbesondere wenn der Shuttle-Bahnhof in Kanäle verbracht wird, die sich hoch über einem Hallenboden erstrecken. Das Shuttle ist während eines Transfervorgangs allzeit gesichert. Das Shuttle kann beim Ein- und Ausführen des Shuttle-Bahnhofs nicht beschädigt werden, da beim Wechseln von Kanälen zwingend eine Hubbewegung des Regalbediengeräts erforderlich ist.

Der Hubtisch ist aus der Regalstellung gegenüber dem Gestell vertikal mit einem Lastaufnahmemittel eines Regalbediengeräts, in die Transportstellung hebbar.

Dabei ruht der Hubtisch in der Regalstellung auf dem Gestell, und das Gestell ruht in der Transportstellung auf dem Hubtisch.

Ferner ist es von Vorteil, wenn der Hubtisch mindestens einen Längsträger und mindestens einen Querträger aufweist.

Bei einer weiteren bevorzugten Ausführungsform ist vorzugsweise jeder Querträger mit mindestens einem Sicherungselement, vorzugsweise in Form eines Stifts oder Dorns, ausgestattet, welches in der Transportstellung in Eingriff mit einer Sicherungsöffnung im Shuttle ist und welches in der Ruhestellung außer Eingriff mit dem Shuttle ist.

Weiter ist es von Vorteil, wenn das Sicherungselement im Wesentlichen senkrecht aus einer Oberfläche des Querträgers hervorsteht, vorzugsweise in Hubrichtung.

Bei einer besonderen Ausgestaltung weist das Gestell zwei seitlich angeordnete Regalauflageabschnitte und einen dazwischen angeordneten Hubtisch-Lagerabschnitt auf.

Dabei kann der Hubtisch-Lagerabschnitt mindestens einen, im Querschnitt vorzugsweise U-förmigen und nach unten offenen, sich in Längsrichtung erstreckenden Aufnahmezinken aufweisen, wobei jeder Aufnahmezinken eine Höhe aufweist, die größer als ein maximaler Hub zwischen dem Gestell und dem Hubtisch ist.

Vorzugsweise weist jeder Aufnahmezinken mindestens eine Öffnung auf, durch die der Hubtisch derart durchgreifen kann, dass das Shuttle in der Transportstellung, vorzugsweise allein, auf dem Hubtisch ruht.

Ferner wird ein Regal für ein Kanallager vorgeschlagen, wobei das Regal eine Vielzahl von Kanälen zur Positionierung von einer Vielzahl von Ladungsträgern darin auf seitlich an Regalstehern angeordneten Regalschienen aufweist, wobei jeder Kanal einen Regalübergabeplatz aufweist, der derart ausgebildet ist, dass er einen Shuttle-Bahnhof aufnehmen kann.

Das Regal bzw. die Kanäle sind somit zur Aufnahme des oben beschriebenen Bahnhofs angepasst. Der Bahnhof kann in die Übergabeplätze eingehoben und/oder eingeschoben werden. Das Umsetzen des Bahnhofs zwischen verschiedenen Kanälen ist problemlos möglich.

Gemäß einem weiteren Aspekt wird ein Kanallager vorgesehen, das einen Shuttle-Bahnhof der oben beschriebenen Art sowie ein Regal der oben beschriebenen Art umfasst.

Gemäß einem noch weiteren Aspekt der vorliegenden Erfindung wird ein Verfahren zum Bereitstellen eines Shuttles in verschiedenen Kanälen eines Lagers vorgesehen, wobei das Verfahren die folgenden Schritte aufweist: Verfahren eines Shuttles in einen Shuttle-Bahnhof; Abkoppeln des mit dem Shuttle bestückten Bahnhofs von einem Übergabeplatz eines ersten Kanals eines Regals, vorzugsweise durch Ausheben und/oder Herausziehen des Bahnhofs mittels eines Regalbediengeräts oder mittels eines Staplers; und Umsetzen des mit dem Shuttle bestückten Bahnhofs mittels dem Regalbediengerät oder mittels dem Stapler in einen Übergabeplatz eines anderen Kanals.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische perspektivische Ansicht eines Shuttle-Kanallagers gemäß der vorliegenden Erfindung;
- Fig. 2a und 2b: perspektivische Ansichten eines Shuttle-Bahnhofs;
- Fig. 3: eine perspektivische Ansicht eines Übergabeplatzes in einem Regal;
- Fig. 4: den Übergabeplatz der Fig. 3, wobei der Bahnhof der Fig. 2 im Regal der Fig. 3 positioniert ist;
- Fig. 5: eine perspektivische Ansicht auf das Regal der Fig. 4 aus einem anderen Winkel;
- Fig. 6a und 6b: Abwandlungen des Regals und des Bahnhofs;
- Fig. 7: ein Flussdiagramm eines erfindungsgemäßen Verfahrens;
- Fig. 8: eine perspektivische Draufsicht auf eine weitere Ausgestaltung eines Shuttle-Bahnhofs;
- Fig. 9: eine perspektivische Untersicht auf den Bahnhof der Fig. 8, wobei zusätzlich ein Shuttle dargestellt ist;
- Fig. 10: einen Übergabeplatz in einem Regal, der zur Aufnahme des Bahnhofs der Fig. 8 und 9 geeignet ist;
- Fig. 11: den Übergabeplatz der Fig. 10, wobei der Bahnhof der Fig. 8 und 9 in den Übergabeplatz bzw. das Regal eingehoben ist;
- Fig. 12: eine perspektivische Explosionsdarstellung eines erfindungsgemäßen Shuttle-Bahnhofs;
- Fig. 13: den Shuttle-Bahnhof der Fig. 12 mit abgesenktem Hubtisch;
- Fig. 14: den Shuttle-Bahnhof der Fig. 13 mit angehobenem Hubtisch, wobei der Bahnhof zwischen zwei Schienen eines Kanalendes eingehängt ist;
- Fig. 15: eine Vorderansicht des Shuttle-Bahnhofs der Fig. 14 inklusive Shuttle, wobei der Hubtisch in seiner abgesenkten Position gezeigt ist;
- Fig. 16: eine Vorderansicht des Shuttle-Bahnhofs der Fig. 13 ohne Shuttle; und
- Fig. 17: eine Vorderansicht des Shuttle-Bahnhofs der Fig. 14 inklusive Shuttle, wobei der Hubtisch in seiner angehobenen Position gezeigt ist.

In der nachfolgenden detaillierten Beschreibung der Erfindung werden ähnliche Elemente mit ähnlichen Bezugsziffern bezeichnet. Haben Elemente gegenüber der vorherigen Beschreibung eine Abwandlung erfahren, so wird dies explizit erwähnt werden.

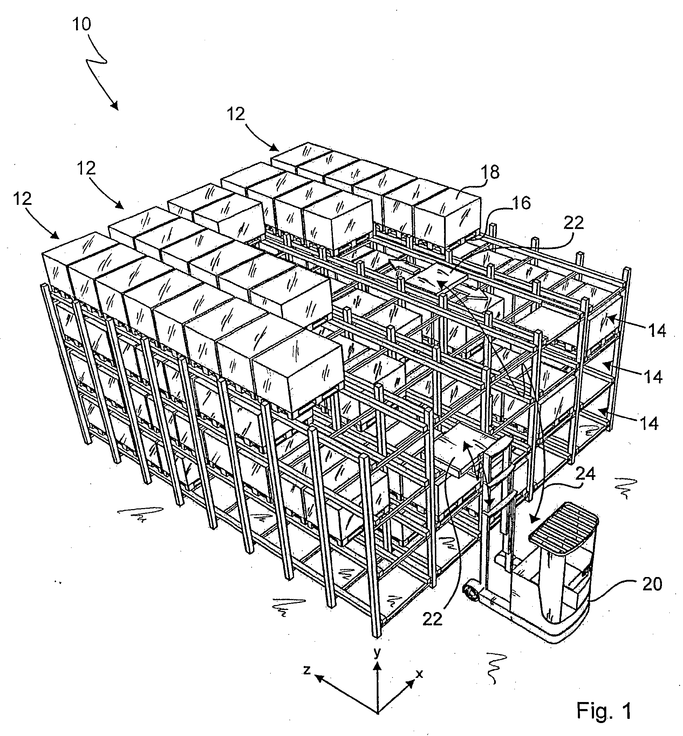

Fig. 1 zeigt eine schematisierte perspektivische Ansicht eines Shuttle-Kanallagers 10 gemäß der vorliegenden Erfindung.

Das Kanallager 10 weist einen Block aus nebeneinander angeordneten Regalen 12 auf. Eine Regalfront spannt sich in einer XY-Ebene auf. Eine Regaltiefe verläuft in einer Z-Richtung. Jedes der Regale 12 weist hier exemplarisch vier übereinander angeordnete Regalkanäle 14 auf. Mehr oder weniger Kanäle und Regale können vorgesehen werden. Die Kanäle 14 dienen zur Lagerung von Ladungsträgern 16, wie z.B. Paletten, Tablaren, etc., die wiederum mit Artikeln 18 bestückt sind. Nachfolgend werden exemplarisch Paletten als Ladungsträger verwendet. Die mit Artikeln 18 bestückten Paletten 16 werden mittels eines Regalförderzeugs 20 in die Kanäle 14 eingelagert und ausgelagert. In Fig. 1 ist exemplarisch ein Stapler 20 gezeigt. Es versteht sich, dass in einem (vollautomatisierten) Lager die Versorgung der Regale 12 z.B. auch mit einem Regalbediengerät erfolgen kann. Das Regalbediengerät ist vorzugsweise schienengeführt und versorgt Regalfronten von gegenüberliegenden Regalblöcken, wobei in Fig. 1 nur ein einziger Block gezeigt ist, mit Paletten 16. Der Raum zwischen zwei Regalblöcken, in dem sich das bzw. die Regalbediengeräte bewegen, wird als Regalgasse bezeichnet, die sich üblicherweise in der X-Richtung erstreckt.

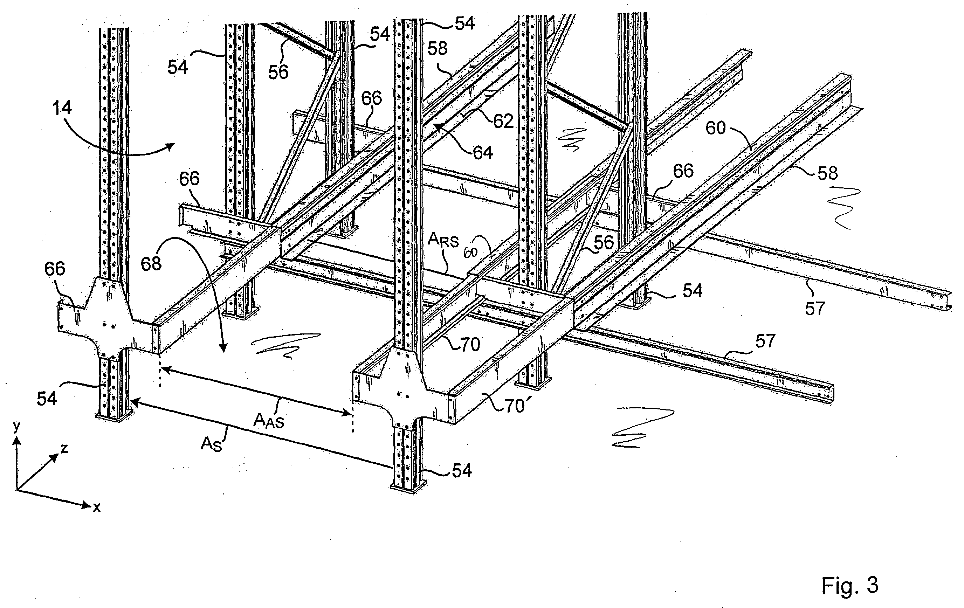

Die Paletten 16 werden innerhalb der Kanäle 14 mit Kanalfahrzeugen 22, den so genannten Shuttle 22, bewegt. Ein Shuttle 22 ist ein schienengeführtes Fahrzeug mit einer vertikal (Y) beweglichen Hubeinrichtung. Die Fahrschienen des Shuttles 22, die in der Fig. 1 nicht explizit gezeigt sind, sind am Regal 12 befestigt, so dass das Shuttle 22 mit abgesenkter Hubeinrichtung eine Palette 16 unterfahren kann, die Palette 16 mit der Hubeinrichtung anheben kann und die Palette 16 dann zur Lagerung in den Kanal 14 hinein oder zur Auslagerung an die Regalfront transportieren kann. Das Shuttle 22 ist mit einer geeigneten Sensorik versehen, um einen Abstand zu bereits eingelagerten Paletten 16 bzw. zu einem Kanalende zu bestimmen. Das Shuttle 22 wird üblicherweise mittels des Staplers 20 in einen vorbestimmten Kanal 14 des Regals 12 eingesetzt. Beim Einlagern einer Palette 16 in diesen vorbestimmten Kanal 14 wird die Palette 16 an einen Übergabeplatz verbracht, der unter Bezugnahme auf Fig. 3 noch genauer beschrieben werden wird. Von dort aus holt das Shuttle 22 die Palette 16 ab und lagert sie ein. Ein Auslagerungsvorgang erfolgt in umgekehrter Reihenfolge. Ist ein Kanal 14 voll oder leer, kann das Shuttle 22 umgesetzt werden. Das Shuttle 22 kann natürlich zu jedem beliebigen Zeitpunkt umgesetzt werden. Je nach Anforderung kann ein Kanal 14 komplett mit Paletten 16 gefüllt oder geleert werden. Dazu werden einzelne Paletten 16 eingelagert oder ausgelagert. Bei einer Anwendung als Durchlauflager wird von einer Regalfront aus eingelagert. Von einer gegenüberliegenden Regalfront, d.h. an einer Rückseite, wird ausgelagert. Beim Auslagern werden leer gewordene Lagerplätze mit bereits eingelagerten Paletten 16 durch Vorwärtsbewegung derselben mittels des Shuttles 22 nachgefüllt, so dass einlagerseitig Lagerplätze wieder frei werden.

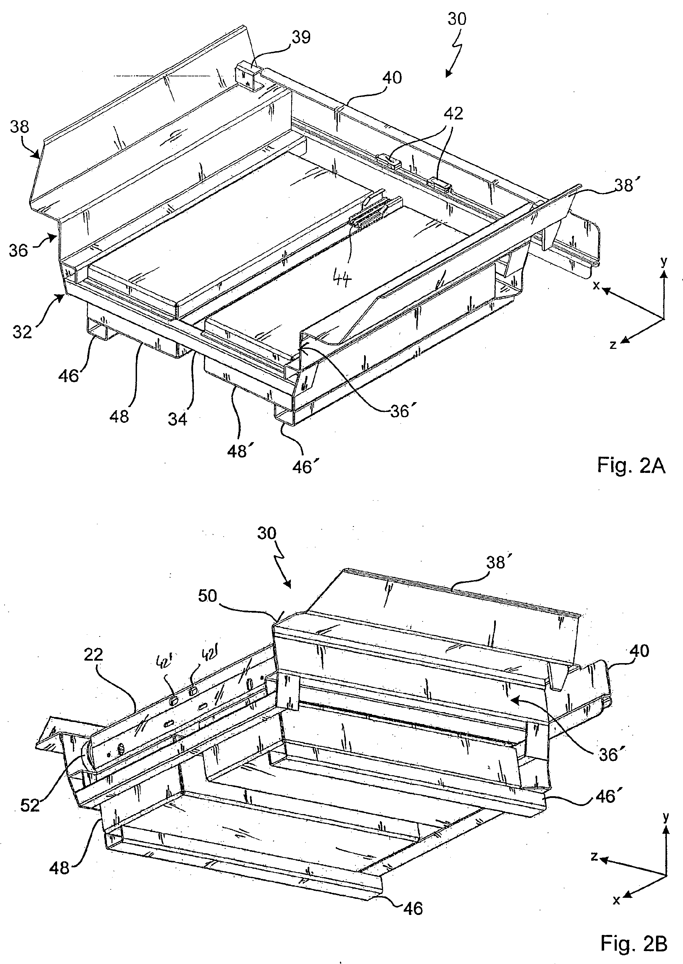

Fig. 2a und 2b zeigen eine erste Ausführungsform eines Shuttle-Bahnhofs 30 in einer perspektivischen Ansicht. Fig. 2a zeigt eine perspektivische Draufsicht. Fig. 2b zeigt eine perspektivische Untersicht des Bahnhofs 30 der Fig. 2a. Ein Shuttle-Bahnhof wird oft auch als "Docking Station" bezeichnet, an der das Shuttle 22 "andockt", um geladen und versetzt zu werden oder um Paletten aufzunehmen bzw. abzugeben.

Der Shuttle-Bahnhof 30 weist einen Rahmen 32 bzw. ein Gestell 32 auf. Das Gestell 32 weist z.B. in der Längsrichtung Z der Kanäle 14 (vgl. Fig. 1) orientierte Schienenabschnitte 36 bzw. 36' auf. Die optionalen Schienenabschnitte 36 sind im Beispiel der Fig. 2 aus einem Vierkantrohr, das als Laufschiene für Laufräder 52 des Shuttles 22 dient, und einer daran anschließenden Seitenwand gebildet, die im Wesentlichen in der YZ-Ebene orientiert ist. An diese vertikale Seitenwand schließt eine im Beispiel der Fig. 2 (im Querschnitt) Z-förmige Zentriereinrichtung 38, 38' an. Die Zentriereinrichtung 38, 38' kann in Längsrichtung Z Endanschläge 39, 39' aufweisen. Die benachbarten Schienenabschnitte 36, 36' und die Komponenten der Zentriereinrichtung 38, 38' sind bodenseitig mittels Querstreben 34 miteinander verbunden, die im Wesentlichen in der X-Richtung verlaufen. Die Querstreben 34 sind in der Ansicht der Fig. 2b besonders gut zu erkennen.

Es versteht sich, dass das Gestell 32 aus einem oder mehreren Teilen gebildet sein kann. Insbesondere der Schienenabschnitt 36 und die Zentriereinrichtung 38 bzw. der Schienenabschnitt 36' und die Zentriereinrichtung 38' können jeweils einstückig ausgebildet sein, wobei z.B. ein Blech entsprechend gefalzt wird. Die Schienenabschnitte 36, 36' können aber auch weggelassen werden, so dass der Shuttle-Bahnhof 30 direkt in dann durchgehend ausgebildete Schienen (hier nicht dargestellt) eingehängt wird.

Die Zentriereinrichtung 38, 38' dient zur Zentrierung in X-Richtung beim Absetzen einer Palette 16 durch den Stapler 20 auf dem Bahnhof 30. Dazu verjüngt sich der Querschnitt der Querzentriereinrichtung 38, 38' in der XY-Ebene von einer Kanaloberseite zu einer Kanalunterseite. Ein lichter Abstand von unteren Kanten der sich verjüngenden Seitenwände der Zentriereinrichtung 38, 38' entspricht vorzugsweise einer Breite der Paletten 16, wobei Toleranzen berücksichtigt werden können. Die Seitenwände der Zentriereinrichtung 38, 38' dienen somit beim Absetzen der Palette 16 als trichterförmige Führung. Die Palette 16 sitzt in einem abgesetzten Zustand somit in X-Richtung in einer vordefinierten Lage, vorzugsweise mittig zum Kanal 14.

Das Gestell 32 umfasst des Weiteren vorzugsweise eine Anschlageinrichtung 40. Die Anschlageinrichtung 40 kann in Form eines Blechs 40 realisiert sein, das in der XY-Ebene über eine Breite eines Kanals 14 vorsteht, um als mechanischer Anschlag beim Einsetzen des Bahnhofs 30 in die Regale 12 bzw. die Kanäle 14 zu dienen. Des Weiteren dient das Blech 40 als mechanischer Anschlag für die Shuttles 22, um zu verhindern, dass die Shuttles 22 aus einem Kanal 14 herausfallen oder -fahren können, wenn der Bahnhof 30 in den Kanal 14 eingehängt ist. Außerdem dient er als visuelle und physische Barriere für Bedienpersonal, um ein Eintreten in den Kanal 14 zu verhindern, während ein Shuttle 22 im Kanal 14 arbeitet. Diese Barriere dient auch als Schutz des Shuttles 22 vor Staplergabeln und dergleichen.

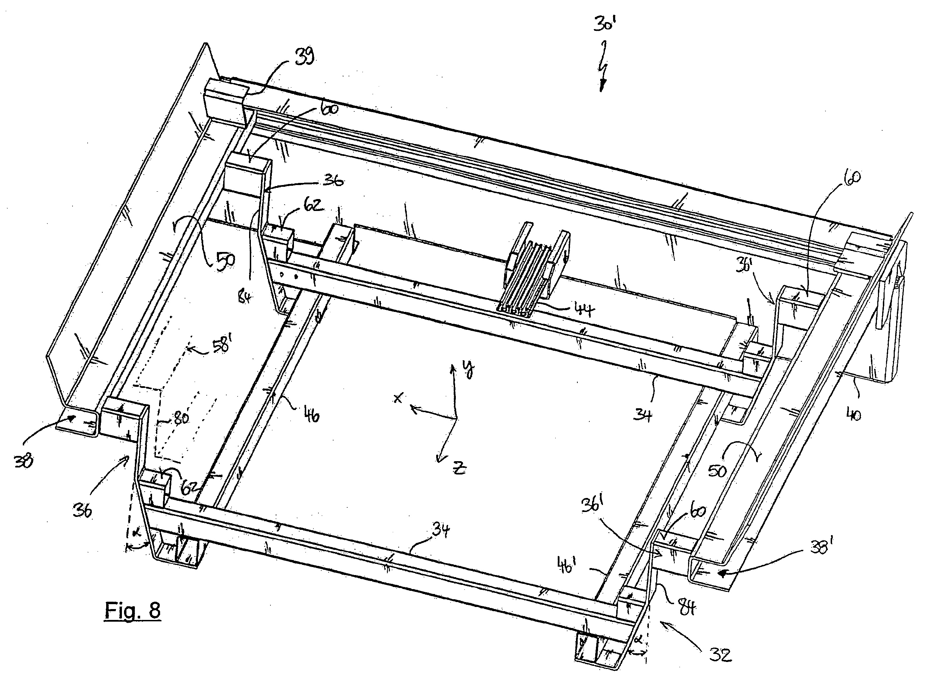

Der Bahnhof 30 kann optional eine oder mehrere Sensoreinrichtungen 42, wie z.B. Lichtschrankenelemente (Sender, Empfänger, Reflektoren, usw.), aufweisen, um eine Notaus-Funktion zu ermöglichen. Das Shuttle 22 verfügt dann über entsprechend angepasste Sensoreinheiten (vgl. 42' in Fig. 8), so dass zwischen dem Shuttle 22 und den Sensoreinrichtungen 42 z.B. eine Licht- oder Laserschranke errichtet werden kann. Diese Lichtschranken erstrecken sich im Wesentlichen in die Tiefe (Z-Richtung) eines Kanals 14. Bei einer bevorzugten Ausführungsform sind Lichtschranken in Fahrtrichtung nach vorn und nach hinten relativ zum Shuttle 22 vorgesehen. Damit ist es möglich, auch Unterbrechungen des Strahlengangs innerhalb des Kanals 14 zu erfassen, um ggf. eine Notausschaltung hervorzurufen.

Wird der Strahlengang z.B. durch eine quer in den Kanal 14 eintretende Bedienperson unterbrochen, führt dies automatisch zu einer Notabschaltung ("Notaus") des Shuttles 22. Das Shuttle 22 kann dann nicht weiter verfahren werden. Personenschäden sind somit ausgeschlossen. Im Stand der Technik wird üblicherweise nur ein Kanaleingang bzw. -ausgang in Querrichtung (X) überwacht. Damit kann ein unbefugtes Betreten eines Kanals durch Personen nur registriert werden, wenn die Person auch tatsächlich über den Ein- oder Ausgang in den Kanal 14 eintritt. Ein seitliches Einsteigen kann nicht erfasst werden.

Es versteht sich, dass mehrere solcher Sensoreinheiten quer nebeneinander angeordnet werden können, um eine Art Strahlenteppich zu erzeugen. Insbesondere wird die Kanaltiefe über die gesamte Kanalbreite überwacht. In diesem Fall ist es sogar möglich, den Eintritt lediglich eines Beins einer Person in einem äußeren Randbereich an einer beliebigen Stelle im Kanal 14 zu registrieren.

Neben Licht- und Lasersensoren 42 lassen sich natürlich auch andere Sensortypen einsetzen, wie z.B. Infrarotsensoren, Ultraschallsensoren, Wärmesensoren, usw. Die eingesetzten Sensortypen sollten geeignet sein, einen unbefugten Eintritt einer Person zu detektieren, um eine Notabschaltung veranlassen zu können. Vorzugsweise sind die Sensoren zu einer Überwachung der gesamten Kanaltiefe geeignet.

Wenn kein Bahnhof 30 in den Kanal 14 eingesetzt ist, kann eine Überwachung des Kanals in Längsrichtung (Z) erfolgen, indem die Sensoreinrichtungen an einem oder beiden Enden des Kanals mittels eines quer verlaufenden Arms (nicht dargestellt) am Regal 12 oder den Regalschienen 58 befestigt werden. Diese Arme werden so befestigt, dass vorzugsweise eine Überwachung in der Mitte der Breite des Kanals erfolgt. Die Arme können schwenkbar am Regal angelenkt sein, um sowohl mit Bahnhof 30 als auch ohne Bahnhof 30 arbeiten zu können. Vorzugsweise werden am Arm lediglich Reflektoren, wie z.B. Spiegel, angebracht.

Die Sensoren (insbesondere am Shuttle) haben dann einen entsprechenden Öffnungswinkel, um eine Höhendifferenz zwischen Shuttle 22 und Sensoren 42 ausgleichen zu können, insbesondere wenn das Shuttle 22 im Kanal 14 verfahren wird. Der Öffnungswinkel kann aber sehr klein gewählt werden, wenn die Sensoren 42 am Bahnhof 30 angebracht werden.

Die Sensoreinheiten 42 können darüber hinaus auch zur Abstandsbestimmung zwischen dem Shuttle 22 und dem Bahnhof 30, d.h. dem Kanalende, verwendet werden.

Der Bahnhof 30 kann ferner einen (Energie-)Kopplungsmechanismus 44 aufweisen, um eine elektrische Verbindung mit dem Shuttle 22 herzustellen, wobei das Shuttle 22 dann ein entsprechendes Gegenstück aufweist. Mit Hilfe z.B. eines Steckers lässt sich das Shuttle 22 mit Energie versorgen, wenn das Shuttle 22 vollständig in den Bahnhof 30 eingefahren ist. Die Energieversorgung kann auch berührungslos (z.B. induktiv) erfolgen.

Eine derartige Situation ist in der Fig. 2b gezeigt. In der Fig. 2b ist ein Shuttle 22 vollständig in den Bahnhof 30 eingefahren. Die Länge des Bahnhofs ist so gewählt, dass das Shuttle 22 im eingefahrenen Zustand vorzugsweise nicht über den Bahnhof 30 in Z-Richtung vorsteht.

Die Höhe der Seitenwände der Schienenabschnitte 36 bzw. 36' ist so gewählt, dass sie leicht höher als eine Höhe des Shuttles 22 ist. Die Seitenwände gehen in Abstelloberflächen 50 über. Die (Paletten-)Abstelloberflächen 50 sind Teil der hier Z-förmig ausgebildeten Zentriereinrichtung 38, 38'. Auf die Abstellflächen 50 werden die Paletten 16 abgestellt.

Ferner sind in Fig. 2b optionale Absetzstreben 46, 46' gut zu erkennen. Die Absetzstreben 46, 46' verlaufen im Wesentlichen in Z-Richtung und sind angepasst, mit einem Lastaufnahmemittel, wie z.B. Gabeln, des Staplers 20 (vgl. Fig. 1) zusammenzuwirken.

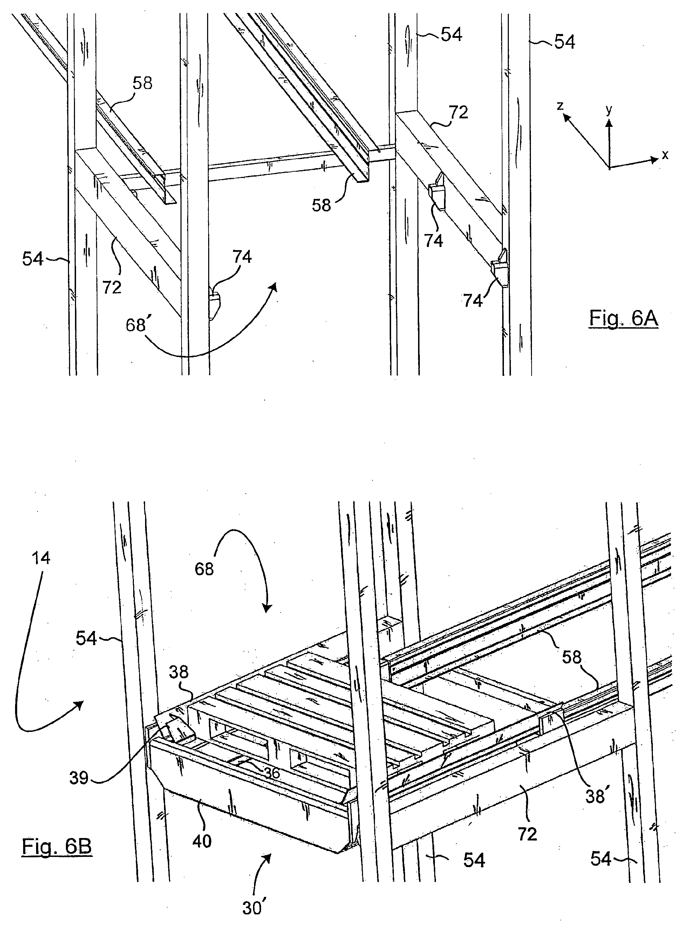

Ferner sind in den Fig. 2a und 2b Batteriefächer 48 gezeigt, die jedoch nur optional vorgesehen sind. In den Batteriefächern 48 können austauschbare Batterien gelagert werden, die die zum Aufladen des Shuttles 22 erforderliche Energie bereitstellen, wenn sich das Shuttle 22 im Bahnhof 30 aufhält. Sind die Kanäle 14 selbst elektrifiziert, so kann auf die Batterie verzichtet werden, wie es im Zusammenhang mit den Fig. 6a und 6b noch näher beschrieben werden wird.

Bezug nehmend auf Fig. 3 ist ein Kanal 14 isoliert gezeigt. Es versteht sich, dass der in Fig. 3 gezeigte Kanalaufbau für jeden der Kanäle 14 gilt und sich nach links und rechts und oben fortsetzen kann. Der in Fig. 3 gezeigte Kanal 14 ist in einer untersten Ebene, d.h. am Boden des Kanallagers 10, angeordnet.

Die Regale 12 weisen eine Vielzahl von vertikal (Y-Richtung) verlaufenden Regalstehern 54 auf. Die Regalsteher 54 können mit Verbindungsstreben 56 miteinander verbunden sein. Ein lichter Abstand A_{S} zwischen Regalstehern 54 beträgt bei der Verwendung von Paletten 16 mit Breiten von 1200 mm z.B. 1400 mm. Dies bedeutet, eine Breite des Kanals 14 beträgt 1400 mm, so dass bei einer mittig zur Kanalmitte eingelagerten Palette 16 links und rechts 100 mm Spiel bzw. Raum für einen Überhang von Artikeln 18 auf der Palette 16 bleiben. In der Längsrichtung (Z-Richtung) des Kanals 14 verlaufen seitlich an den Regalstehern 54 angebrachte Regalschienen 58. Die Regalschienen 58 weisen jeweils eine horizontal verlaufende Abstellfläche 60 auf, auf der die Paletten 16 abgestellt werden können. Die Regalschienen 58 weisen ferner eine horizontal verlaufende Lauffläche 62 für Laufräder 52 (vgl. Fig. 2b) der Shuttle 22 auf. Die Laufflächen 62 sind über im Wesentlichen vertikal verlaufende Seitenwände 64 mit den Abstellflächen 60 verbunden. Ein lichter Abstand zwischen den Seitenflächen 64 ist mit A_{RS} bezeichnet und beträgt z.B. 1000 mm. Die Breite der Shuttle 22 beträgt dann vorzugsweise 950 mm, so dass ein seitliches Spiel von ± 25 mm in einer Fahrebene des Shuttles 22 vorhanden ist.

Die Regalschienen 58 sind mittels in Querrichtung X an den Regalstehern 54 befestigten Halteelementen 66 montiert.

Die Regalschienen 58 können regaleingangsseitig einen Lagerplatz vor der eigentlichen Regalfront enden. Der eingangsseitig erste Lagerplatz wird nachfolgend als Übergabeplatz 68 bezeichnet. Der Übergabeplatz 68 kann anstelle der Regalschienen 58 Aufnahmeschienen 70 aufweisen. Die Aufnahmeschienen 70 sind angepasst, den Bahnhof 30 durch Einheben und/oder Einschieben aufzunehmen. Ein lichter Abstand A_{AS} der Aufnahmeschienen 70 ist größer als der lichte Abstand A_{RS} der Regalschienen 58. Der Abstand der Aufnahmeschienen 70 ist vorzugsweise um die Materialstärken der Regalschienen 58 größer.

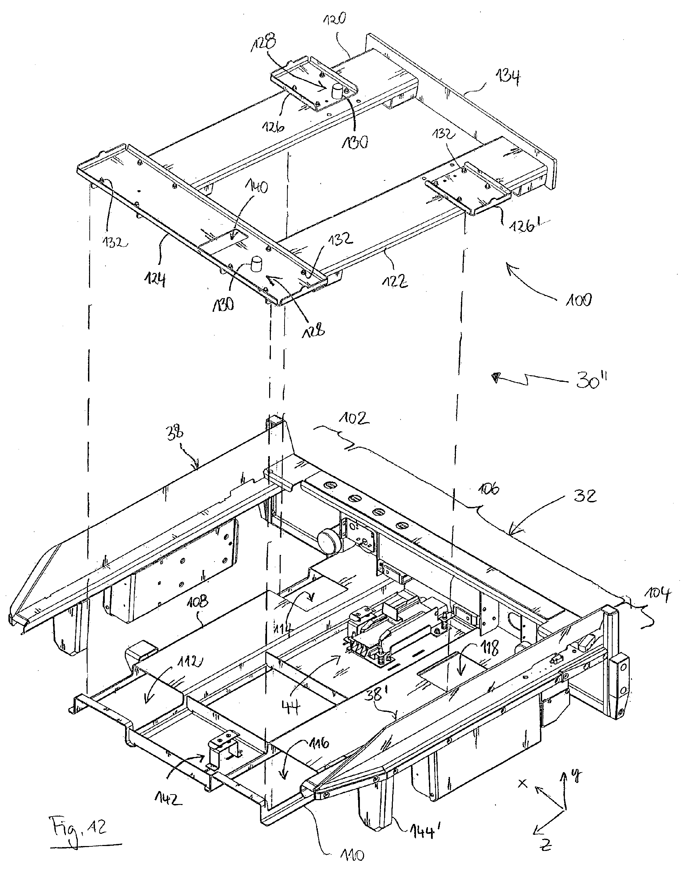

Alternativ können die Regalschienen 58 auch bis ganz nach vorn reichen, d.h. den Übergabeplatz 68 vollständig durchdringen, wie es im Zusammenhang mit einer weiteren Ausführungsform eines Bahnhofs erläutert wird, die anhand der Fig. 12 bis 17 beschrieben werden wird.

Die Aufnahmeschienen 70 sind in Fig. 3 vorzugsweise derart ausgebildet, dass die Regalschienen 58 auf diese geschoben werden können. Deshalb kann die Länge der Aufnahmeschienen 70 länger als ein Lagerplatz sein, wie es exemplarisch anhand einer Aufnahmeschiene 70' in Fig. 3 gezeigt ist, die eine linke Aufnahmeschiene eines rechts zum Übergabeplatz 68 angeordneten weiteren Übergabeplatzes darstellt. Die Regalschienen 58 können des Weiteren auf Querträgern 57 aufliegen, um die hohen Belastungskräfte aufzunehmen, wenn die Kanäle 14 mit Paletten 16 beladen sind.

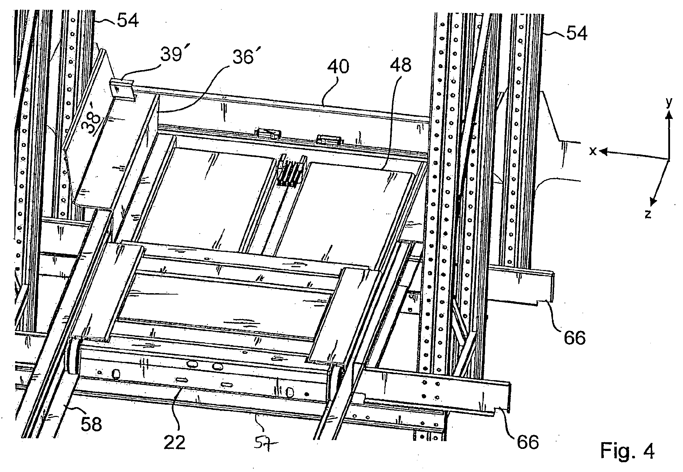

Fig. 4 zeigt den Übergabeplatz 68 der Fig. 3 aus der Perspektive eines Kanalinneren. In den Übergabeplatz 68 ist der Bahnhof 30 der Fig. 2a und 2b eingehoben und/oder eingeschoben worden. Es versteht sich, dass der Bahnhof 30 auch auf andere Weise eingangsseitig an den Kanal 14 gekoppelt werden kann. Der Bahnhof 30 könnte z.B. auch leicht über den Kanal 14 hinausragen.

Die Abmessung und Anordnung der Schienenabschnitte 36, 36' des Gestells 32 des Bahnhofs 30 sind hier derart gewählt, dass die Schienenabschnitte 36, 36' bündig an die Regalschienen 58 des Kanals 14 koppeln. Auf diese Weise ist gewährleistet, dass ein im Bahnhof 30 befindliches Shuttle 22 problemlos aus dem Bahnhof 30 in den Kanal 14 einfahren kann. Ein aufwändiges, kompliziertes Einsetzen des Shuttles 22 in den Kanal 14 bzw. die Regalschienen 58 entfällt vollkommen.

Ferner ist in Fig. 4 zu erkennen, dass die Zentriereinrichtung 38, 38' an den in dem Kanal 14 zur Verfügung stehenden Raum angepasst ist.

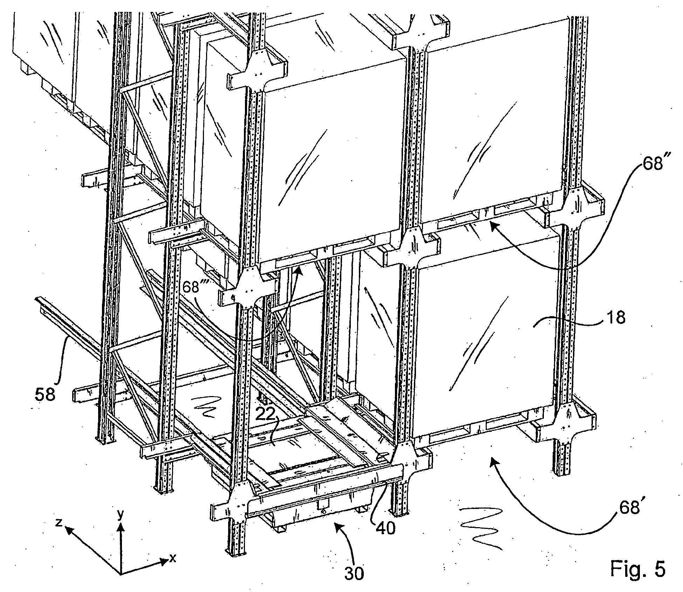

Bezug nehmend auf Fig. 5 ist der in den Übergabeplatz 68 der Fig.4 eingebaute Bahnhof 30 von außerhalb des Regals 12 perspektivisch gezeigt. Der Bahnhof 30 schließt bündig mit einer Regalfront ab. Das Shuttle 22 befindet sich in der Fig. 5 im Bahnhof 30.

Wenn kein Bahnhof 30 in den Kanal 14 eingesetzt ist, kann der Übergabeplatz 68 als konventioneller Lagerplatz genutzt werden. Dies ist exemplarisch bei benachbarten Übergabeplätzen 68', 68" und 68'" gezeigt.

Fig. 6a und 6b zeigen eine zweite Ausführungsform eines Übergabeplatzes 68 bzw. einen Bahnhof 30', bei dem die Energieversorgung für das Shuttle 22 mittels eines elektrifizierten Kanals 14 erfolgt.

In Fig. 6a ist eine weitere Ausführungsform eines Übergabeplatzes 68 gezeigt. Der Übergabeplatz 68 der Fig. 6a weist in Längsrichtung Z des Kanals 14 verlaufende Aufnahmebalken 72 zwischen den Regalstehern 54 auf. Der Übergabeplatz 68 der Fig. 6a weist ferner Stützelemente 74 auf, die angepasst sind, mit entsprechenden Elementen des Bahnhofs 30' zu verrasten, wenn der Bahnhof 30' von oben in den Übergabeplatz 68 eingehoben wird. Es versteht sich, dass der Bahnhof 30' ansonsten unverändert bleibt, insbesondere was den bündigen Anschluss der Schienenabschnitte an die Regalschienen 58 betrifft. Im Endbereich der Regalschienen 58 können Steckerelemente zur elektrischen Verbindung mit dem Bahnhof 30' vorgesehen sein, die in den Fig. 6a und 6b jedoch nicht dargestellt sind. Die Regalschienen 58 könnten aber auch durch den gesamten Übergabeplatz 68 laufen, um den Shuttle-Bahnhof der Fig. 12 aufzunehmen.

In Fig. 6b ist der Bahnhof 30' in den Übergabeplatz 68 der Fig. 6a eingehoben. Man erkennt, dass die Batteriefächer 48 nicht mehr vorhanden sind, da die Energiezufuhr mittels des elektrifizierten Kanals 14 erfolgt.

Ferner ist in Fig. 6b eine leere Palette 16 gezeigt, die mittels der Querzentriereinrichtung 38, 38' mittig zur Mitte des Kanals 14 ausgerichtet ist. Die Endanschläge 39 sind in Form von Winkelblechen realisiert, die ein Herausziehen der Palette 16 aus dem Kanal 14 über eine Regalfront hinaus verhindern.

Die Anschlageinrichtung 40' ist im Vergleich zu der Anschlageinrichtung 40 der Fig. 2a und 2b kürzer, da der Bahnhof 30' nur eingehoben, aber nicht eingeschoben wird.

Es versteht sich, dass die Steuerung der Shuttles 22 in den Kanälen 14 mittels einer (nicht dargestellten) Steuereinrichtung (z.B. SPS) erfolgen kann. Die Kommunikation zwischen den Shuttle 22 und der Steuereinrichtung erfolgt vorzugsweise drahtlos, wie es in Fig. 1 mittels Doppelpfeilen 24 angedeutet ist. Die Steuereinrichtung kann optional am Stapler 20 befestigt sein. Sie kann aber auch Teil eines übergeordneten Lagerverwaltungsrechners sein.

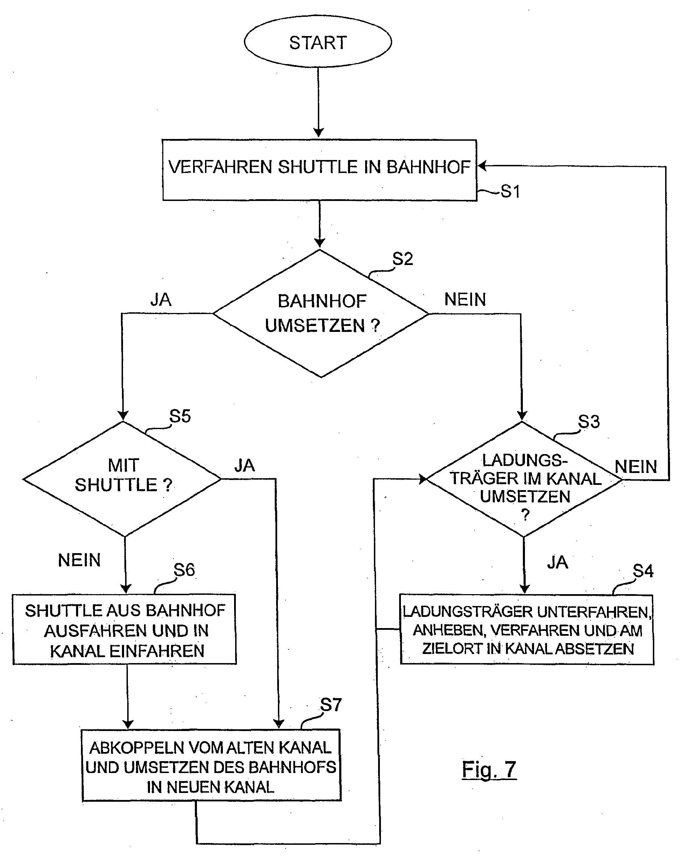

Bezug nehmend auf Fig. 7 ist ein Flussdiagramm für ein Verfahren zum Bereitstellen des Shuttles 22 in verschiedenen Kanälen 14 des Kanallagers 10 gezeigt. In einem ersten Schritt S1 wird ein Shuttle 22 in einen Shuttle-Bahnhof 30 verfahren. In einem Schritt S2 wird der Bahnhof 30 von einem Übergabeplatz 68 eines ersten Kanals 14 im Regal 12 abgekoppelt, und zwar vorzugsweise durch Ausheben und/oder Herausziehen des Bahnhofs 30 mittels eines Regalbediengeräts oder eines Staplers 20. In einem Schritt S7 wird der Bahnhof 30 mit oder ohne Shuttle 22 mit dem Regalbediengerät oder dem Stapler 20 (Regalförderzeug) in einen anderen Übergabeplatz 68 eines anderen Kanals 14 umgesetzt bzw. eingesetzt.

In einem Schritt S3 wird abgefragt, ob Ladungsträger in einem Kanal umgesetzt werden müssen. Wenn ja, werden in einem Schritt S4 die Ladungsträger in diesem Kanal unterfahren, angehoben und an einem Zielort (Kanal oder Bahnhof) abgesetzt. Optional kann das Shuttle nach jedem einzelnen Umsetzvorgang in den Bahnhof zurückkehren, sofern es nicht bereits dort steht, um geladen zu werden. Dies hängt von der Kapazität des Energiespeichers ab. Wenn kein Ladungsträger mehr umzusetzen ist, kehrt das Verfahren zum Schritt S1 zurück.

Es versteht sich, dass das hier skizzierte Verfahren nicht nur für bisher beschriebene Shuttle und Shuttle-Bahnhöfe, sondern auch für nachfolgend noch zu beschreibende gilt.

Fig. 8 zeigt eine perspektivische Ansicht einer weiteren Ausführungsform eines Bahnhofs 30'.

Der Bahnhof 30' ist im Wesentlichen gleich wie der Bahnhof 30 aufgebaut. Der Bahnhof 30' unterscheidet sich vom Bahnhof 30 durch die Ausgestaltung der Schienenabschnitte 36, 36' und die weggelassenen Batteriefächer 48.

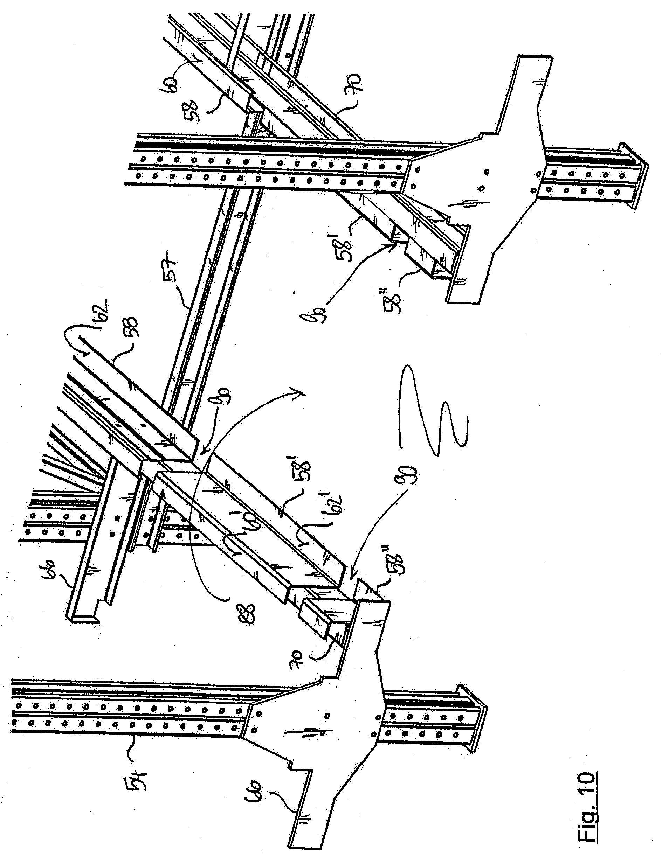

Die Schienenabschnitte 36, 36' sind nicht mehr durchgehend, wie z.B. bei der Ausführungsform gemäß Fig. 2a. Die Schienenabschnitte 36, 36' der Fig. 8 stellen nur noch Bruchteile dar, wobei eine innere Kontur 80 der Schienenabschnitte 36, 36', die in Fig. 8 mit einer Strichlinie dargestellt ist, einer inneren Kontur der Regalschienen 58 im Wesentlichen entspricht. In der Fig. 8 ist eine Regalschiene 58' durch eine punktierte Linie angedeutet (*vergleiche auch Fig. 10). Die Länge der Schienenabschnitte 36, 36' ist in Z-Richtung stark verkürzt. Sowohl auf der linken Seite als auch auf der rechten Seite des Gestells 32 sind jeweils zwei Schienenabschnitte 36 bzw. 36' vorgesehen. Aus Stabilitätsgründen sind die Schienenabschnitte 36, 36' sich gegenüberliegend angeordnet und mit den Querstreben 34 verbunden. Die Querstreben 34 sind wiederum mit den Streben 46, 46' der Absetzeinrichtung verbunden.

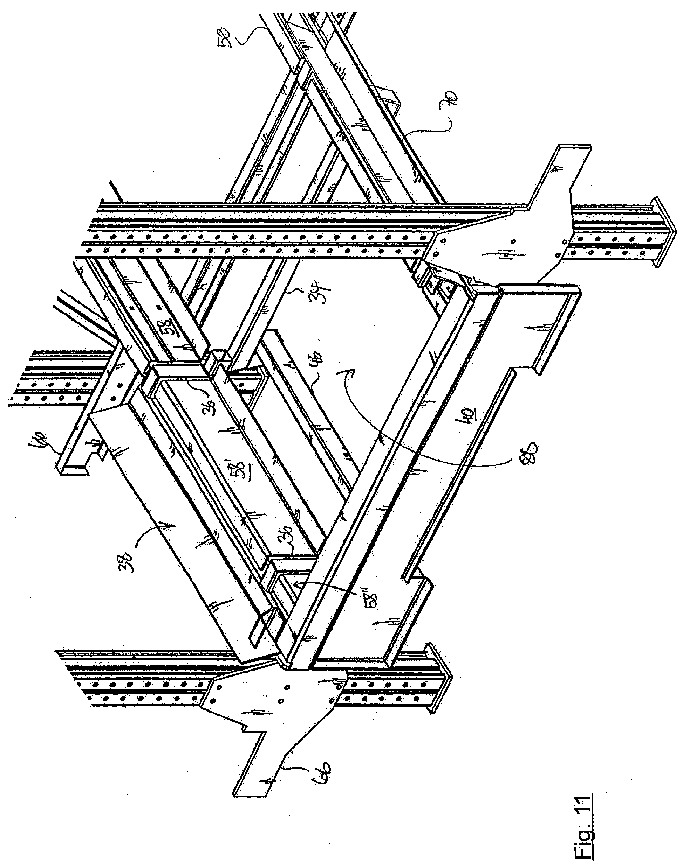

Die Schienenabschnitte 36, 36' sind hier mehrteilig aufgebaut. Für solche Elemente, die die Abstellflächen 60 für die Ladungsträger bereitstellen und die die Laufflächen 62 für die Laufräder 52 des Shuttles 22 bereitstellen, werden z.B. Vierkantrohre eingesetzt. Die Vierkantrohre sind hier an Verbindungseisen 84 angeschweißt. Die Verbindungseisen 84 ermöglichen ferner eine Verbindung zwischen den Schienenabschnitten 36, 36' und den Querstreben 34 bzw. den Absetzstreben 46, 46' Die Verbindungseisen 84 sind jeweils in ihren unteren Abschnitten mit einem Winkel α gegenüber ihren oberen Abschnitten abgewinkelt. Diese Abwinklung erleichtert ein Einheben des Bahnhofs 30' in einen entsprechend angepassten Kanal 14 (vgl. Fig. 11). Der Bahnhof 30' verjüngt sich in diesem Sinne trichterförmig nach unten, so dass ein Einsetzen bzw. ein Heben in Regalschienen 58' (vgl. Fig. 10) einfach zu bewerkstelligen ist. Die abgewinkelten, unteren Teile der Verbindungseisen 84 führen den Bahnhof 30' beim Einheben.

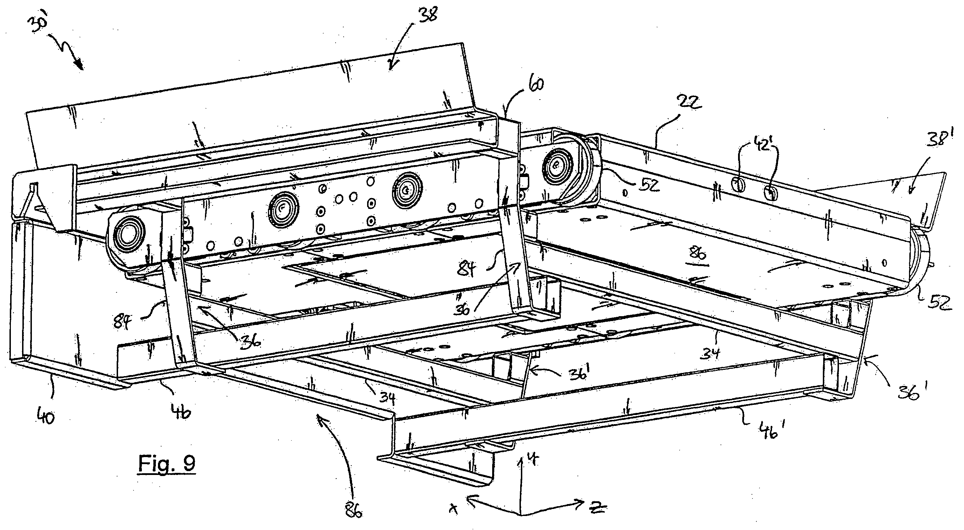

Fig. 9 zeigt den Bahnhof 30' der Fig. 8 in einer perspektivischen Untersicht, wobei ein Shuttle 22 im Bahnhof 30' geparkt ist.

Das Shuttle 22 sitzt mit seiner Unterseite 86 auf den Laufflächen 62 der Schienenabschnitte 36, 36'.

Der Bahnhof 30' ist in einer ausgehobenen Stellung (Transportstellung) gezeigt, wobei die Gabeln des Staplers 20, die normalerweise durch eine Öffnung 86 des Anschlagsblechs 40 entlang der Absetzeinrichtung 46, 46' unter den Bahnhof 30' eingeführt werden, nicht dargestellt sind. Wenn der Bahnhof 30' in einen Kanal 14 eingehoben wird, erfolgt eine Führung durch die abgewinkelten Elemente der Verbindungseisen 84 entlang den Aufnahmeschienen 70, wie es nachfolgend im Zusammenhang mit den Fig. 10 und 11 noch näher beschrieben werden wird.

In Fig. 9 sind auch die Sensoreinrichtungen 42' des Shuttles 22 dargestellt, die einen Strahlengang in Richtung der Tiefe des Kanals 14 (Z-Richtung) ermöglichen.

Fig. 10 zeigt eine weitere Ausgestaltung eines Übergabeplatzes 88, der zur Aufnahme des Bahnhofs 30' geeignet ist, und ähnlich dem Übergabeplatz 68 der Fig. 3 ausgebildet ist.

Der Übergabeplatz 88 weist zusätzlich zu den Aufnahmeschienen 70 fragmentale Regalschienen 58' bzw. 58" mit Abstellflächen 60' und Laufflächen 62' auf. Die Regalschienen 58' und 58" sind so an den Aufnahmeschienen 70 montiert, dass sie eine Fortsetzung der Regalschiene 58 darstellen. Diese Fortsetzung ist durch Lücken 90 unterbrochen. Die Lücken 90 dienen zur Aufnahme der Schienenabschnitte 36, 36' des Shuttle-Bahnhofs 30'.

In Fig. 11 ist der Bahnhof 30' der Fig. 8 und 9 in den Übergabeplatz 88 der Fig. 10 eingehoben. Man erkennt, dass die Schienenabschnitte 36 und die Regalschienenfragmente 58' und 58" im Wesentlichen eine nahtlose Fortsetzung der Regalschiene 58 darstellen. Es versteht sich, dass zwischen den Regalschienen 58 und den Schienenabschnitten 36 kleinere Lücken vorhanden sind. Diese Lücken werden als Spiel beim Einheben des Bahnhofs 30' in den Übergabeplatz 88 benötigt.

Der in den Fig. 8 bis 11 gezeigte Bahnhof 30' wird vorzugsweise an einem gegenüberliegenden Kanalende eingesetzt, wenn am anderen Ende der Bahnhof 30 eingesetzt ist. Der Bahnhof 30' kann auch im Regal 12 verbleiben, um eine Herausfallen des Shuttles 22 jederzeit zu verhindern. Es versteht sich, dass der Bahnhof 30' zur permanenten Lagerung eines Ladungsträgers 18 geeignet ist und somit einen regulären Lagerplatz im Kanal 14 darstellt.

Fig. 12 zeigt eine erfindungsgemäße Abwandlung eines weiteren Shuttle-Bahnhofs 30", der gänzlich ohne Schienenabschnitte 36 bzw. 36' auskommen kann. Fig. 12 zeigt eine perspektivische Explosionsansicht, bei der das Gestell 32 und ein üblicherweise damit beweglich verbundener Hubtisch 100 getrennt voneinander dargestellt sind. Es versteht sich, dass in der nachfolgenden Beschreibung gleiche strukturelle Merkmale mit den gleichen Bezugsziffern wie zuvor versehen werden.

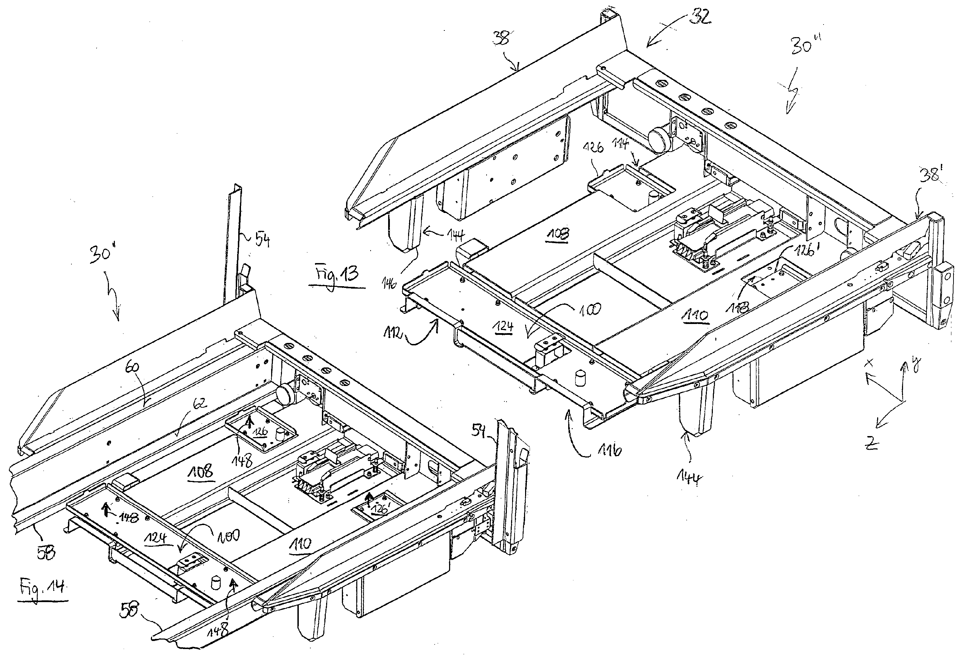

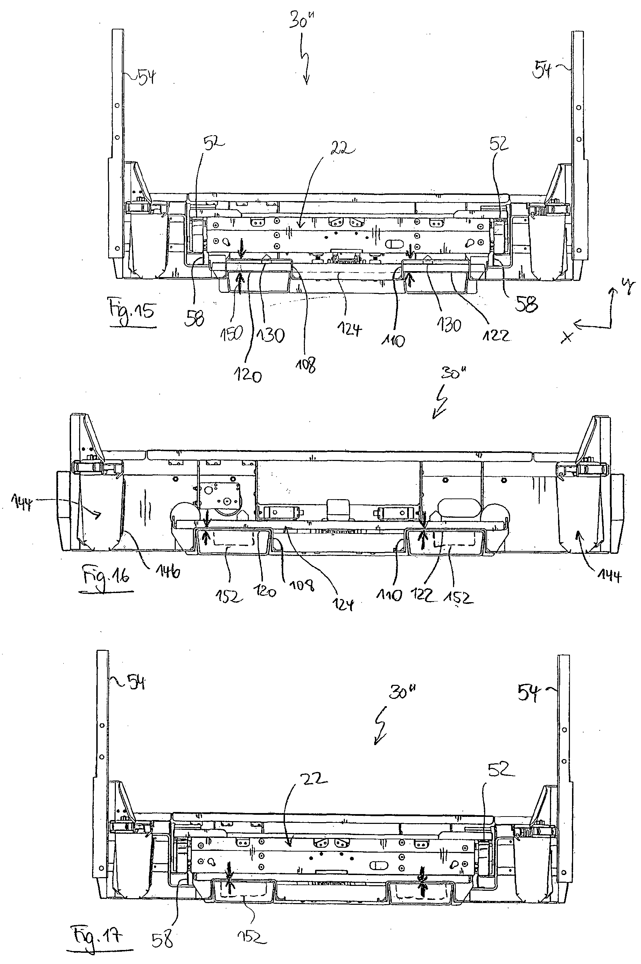

Das Gestell 32 weist hier zwei seitliche Regalauflageabschnitte 102 und 104 auf, die im Wesentlichen den Zentriereinrichtungen 38 bzw. 38' der vorherigen Figuren entsprechen. Die Regalauflageabschnitte 102, 104 weisen jedoch keine Schienenabschnitte 36 bzw. 36' auf. Dies bedeutet, dass der Shuttle-Bahnhof 30" der Fig. 12 ff. in einen Übergabeplatz (nicht dargestellt) eingeschoben oder eingehängt wird, der selbst Regalschienen 58 aufweist, wie es exemplarisch in Fig. 14 dargestellt ist. Die Zentriereinrichtungen 38 und 38' der seitlichen Regalauflageabschnitte 102 und 104 des Shuttle-Bahnhofs 30" der Fig. 12 sind so ausgebildet, dass sie entweder auf den Regalschienen 58 (von oben) aufliegen können oder dass sie Einführhilfen 144 (vgl. z.B. Fig. 16) aufweisen, die zum Beispiel mit den in Fig. 6a gezeigten Elementen 74 oder mit Elementen zusammenwirken, die ähnlich den Elementen 70 bzw. 70' der Fig. 3 ausgebildet sind. Somit lässt sich der Shuttle-Bahnhof 30" in bereits bestehenden Kompaktlagern im Sinne einer Nachrüstung einsetzen.

Zwischen den seitlichen Regalauflageabschnitten 102 und 104 des Gestells 32 ist ein Hubtisch-Lagerabschnitt 106 angeordnet, der mindestens einen in Längsrichtung Z verlaufende Aufnahmezinken 108 sowie den Energiekopplungsmechanismus 44 aufweist. Im Beispiel der Fig. 12 sind zwei Aufnahmezinken 108 und 110 gezeigt. Die Aufnahmezinken 108 und 110 sind hier durch U- oder C-förmige Profile realisiert, die nach unten offen sind. Selbstverständlich könnten auch geschlossene Zinken verwendet werden, wobei deren Höhe (Y-Richtung) geeignet gewählt werden muss, wie es nachfolgend noch ausgeführt werden wird.

Die Aufnahmezinken 108 und 110 weisen z.B. jeweils zwei Öffnungen 112 und 114 bzw. 116 und 118 auf. Es versteht sich, dass der Shuttle-Bahnhof 30" der vorliegenden Erfindung auch nur mit einer einzigen Öffnung oder mit mehr Öffnungen in jeder der Aufnahmezinken 108 bzw. 110 funktioniert.

Der Hubtisch 100 weist hier entsprechend der Ausgestaltung der Aufnahmezinken 108 und 110 zwei Längsträger 120 und 122 auf. Die Form der Längsträger 120 und 122 ist an eine Form der Aufnahmezinken 108 und 110 angepasst. Der Hubtisch 100 weist des Weiteren ein oder mehrere Querträger 124 bzw. 126 und 126' auf, die in Z-Richtung mit einem Abstand versetzt zueinander angeordnet sind. Vorzugsweise jeder Querträger 124, 126 und/oder 126' ist mit einem Sicherungselement 128 ausgestattet. Das Sicherungselement 128 ist hier in Form eines senkrecht aus den Querträgern 124 bis 126' hervorstehenden Dorns 130 gebildet. Die Querträger 124 bis 126' werden vorzugsweise mit Schrauben 132 gegenüber den Längsträgern 120 und 122 gesichert. Um die Querträger 124 bis 126' von den Längsträgern 120 und 122 lösen zu können, damit ein Einbau des Hubtisches 100 in den Hubtisch-Lagerabschnitt 106, insbesondere in die Aufnahmezinken 108 und 110, durchgeführt werden kann, empfiehlt sich die Verwendung von lösbaren Befestigungsmitteln, wie zum Beispiel Schrauben 132.

Die Längsträger 120 und 122 können optional mit einer Frontblende 134 verbunden werden, die sich in der XY-Ebene erstreckt.

Der vordere Querträger 124 weist des Weiteren vorzugsweise eine Öffnung 140 auf, die derart angeordnet ist, dass ein Kontaktelement 142, welches am Gestell 32 befestigbar ist, durch den Querträger 124 durchgreifen kann. Das Kontaktelement 142 kann rein zum mechanischen Lagern des Shuttles 22 verwendet werden. Das Kontaktelement 142 kann aber auch zum Errichten einer elektrischen oder induktiven Verbindung mit dem Shuttle 22 eingesetzt werden. Das Element kann zur Positionserkennung (Referenzpunkt für Shuttle) eingesetzt werden.

Bezug nehmend auf die Fig. 13 und 14 ist der Hubtisch 100 in einem eingebauten Zustand gezeigt, wobei die Fig. 13 den Hubtisch 100 in einer abgesenkten Stellung relativ zu den Aufnahmezinken 108 und 110 zeigt. Die Fig. 14 zeigt eine angehobene Stellung des Hubtisches 100 gegenüber den Aufnahmezinken 108 und 110.

In der abgesenkten Relativstellung des Hubtisches 100, wie sie in der Fig. 13 gezeigt ist, ruht der Hubtisch 100 in den Aufnahmezinken 108 und 110, insbesondere in den Öffnungen 112 bis 118. Die Öffnungen 112 und 118 sind derart tief (Y-Richtung) ausgebildet, dass die Querträger 124 bis 126' vollkommen darin verschwinden können. Damit ist der Weg für ein Shuttle 22 frei, um den Shuttle-Bahnhof 30" verlassen zu können. Das Shuttle 22 kann dann in eine Tiefe (in Z-Richtung) eines Kanals 14 ein- und ausfahren.

In Fig. 14 ist der Shuttle-Bahnhof 30" der Fig. 13 in einer Regalstellung gezeigt. In der Regalstellung ist der Shuttle-Bahnhof 30" in Schienen 58 eingeschoben oder eingehängt. Der Hubtisch 100 ist gegenüber den Aufnahmezinken 108 und 110 angehoben, wie es durch Pfeile 148 angedeutet ist. Die Fig. 14 zeigt in diesem Sinne eine Momentaufnahme (ohne Shuttle 22), wenn eine (hier nicht dargestellte) Gabel eines Gabelstaplers (ebenfalls nicht dargestellt) in Z-Richtung in und unter die Aufnahmezinken 108 und 110 einfährt und anschließend eine Hubbewegung in positiver Y-Richtung macht. In diesem Moment hebt sich der Hubtisch 100 gegenüber den Aufnahmezinken 108 und 110 (begrenzt) an, wie es exemplarisch in der Schnittansicht der Fig. 16 gezeigt ist.

Bezug nehmend auf die Fig. 15 bis 16, die jeweils Vorderansichten des zuvor erläuterten Shuttle-Bahnhofs 30" zeigen, und zwar mit und ohne Shuttle 22 bzw. Regalschienen 58, wird eine Relativbewegung zwischen dem Hubtisch 100 und den Aufnahmezinken 108 und 110 erläutert werden.

Fig. 15 zeigt den Shuttle-Bahnhof 30" der Fig. 13 in einer Vorderansicht, wobei zusätzlich das Shuttle 22 und die Regalschienen 58 gezeigt sind. Der Shuttle-Bahnhof 30" befindet sich in der Fig. 15 in seiner Regalstellung, d.h. der Shuttle-Bahnhof 30" ist in die Schienen 58 eines hier nicht näher bezeichneten Übergabeplatzes (Anfang oder Ende eines Kanals 14) eingeschoben oder eingehängt. Das Shuttle 22 ruht mit seinen Rädern 52 auf den Laufflächen 62 der Schienen 58. Der Hubtisch 100, insbesondere dessen Querträger 124, ist gegenüber den Aufnahmezinken 108 und 110 abgesenkt. Ein Abstand 150 zwischen einer Unterseite der Aufnahmezinken 108 und 110 und einer Oberseite der Längsträger 120 und 122 ist links beim Aufnahmezinken 108 durch einen Doppelpfeil 150 verdeutlicht. Die Dorne 130 sind außer Eingriff mit dem Shuttle 22. Das Shuttle 22 kann frei auf den Schienen 58 hin- und herfahren.

Um den Shuttle-Bahnhof 30" in seine Transportstellung zu bringen, wird der Hubtisch 100 genau um diesen Abstand 150 zum Beispiel mit Gabeln 152 angehoben, die in der Vorderansicht der Fig. 16 exemplarisch mit Hilfe von Strichlinien angedeutet sind. Die Fig. 16 zeigt den Shuttle-Bahnhof 30" ohne Shuttle 22 und Schienen 58 in seiner Transportstellung.

Die Längsträger 120 und 122 sind hier zumindest teilweise geschlossen ausgebildet, um es einem Gabelstaplerfahrer zu ermöglichen, die Gabeln 152 sicher und gezielt unter die Längsträger 120 und 122 (in Z-Richtung) einzufahren. Sobald die Gabeln 152 richtig positioniert sind, können sie in positiver Y-Richtung angehoben werden, bis die Oberseite der Längsträger 120 und 122 an die Unterseite der Aufnahmezinken 108 und 110 anstößt. Die Querträger 124 bis 126' greifen dabei durch die Öffnungen 112 bis 118 hindurch. Gleiches gilt für die darauf befestigten Dorne 130.

In der Transportstellung ruhen die Aufnahmezinken 108 und 110 - und somit das gesamte Gestell 32 - auf den Längsträgern 120 und 122 des Hubtischs 100. Die Dorne 130 kommen in Eingriff mit hier nicht näher gezeigten Sicherungsöffnungen im Shuttle 22 und verhindern so eine Bewegung des Shuttles 22 in die Tiefe eines Kanals 14, wenn der Shuttle-Bahnhof 30" in einem Übergabeplatz eingehängt ist. Anderenfalls verhindern die Dorne 30, dass das Shuttle 22 aus dem Gestell 32 bzw. vom Hubtisch 100 fällt.

Ein derartiger Zustand ist in der Fig. 17 gezeigt.

Fig. 17 zeigt eine Vorderansicht des erfindungsgemäßen Shuttle-Bahnhofs 30" (inklusive Schienen 58 und einem Shuttle 22), wobei der Hubtisch 100 gegenüber dem Gestell 32 angehoben ist, wie es bereits in Fig. 16 gezeigt ist.

Die Dorne 130 sind in der Darstellung der Fig. 17 nicht mehr zu erkennen, weil sie in nicht näher gezeigte und bezeichnete Sicherungsöffnungen des Shuttles 22 eingreifen. Die Räder 52 des Shuttles 22 sitzen auf den Regalschienen 58 auf. Das Shuttle 22 kann sich aber dennoch nicht aus dem Shuttle-Bahnhof 30" herausbewegen, da die Sicherungselemente 128 eine derartige Bewegung verhindern.

Die Fig. 17 zeigt in diesem Sinne zum Beispiel die Situation beim Einhängen oder Einschieben des Shuttle-Bahnhofs 30" in einen Übergabeplatz eines Kanals 14. Um das Shuttle 22 vollständig freizugeben, müssen die Gabeln 152 weiter abgesenkt werden (in negativer Y-Richtung). Dadurch senkt sich der Hubtisch 100 gegenüber dem Aufnahmezinken 108 und 110 ab. Die Dorne 130 werden freigegeben. Man endet dann in einem Zustand, wie er in der Fig. 15 gezeigt ist. Das Shuttle 22 kann dann frei im Kanal 14 hin- und herfahren.

Der erfindungsgemäße Shuttle-Bahnhof 30" zeichnet sich also durch eine besonders hohe Sicherheit sowohl während eines Betriebs in einem Kanal 14 als auch während eines Umsetzen des Shuttle-Bahnhofs 30" zwischen verschiedenen Kanälen 14 eines Regals aus.

## Patentansprüche

1. Shuttle-Bahnhof (30") für ein Shuttle (22) in einem Shuttle-Kanallager (10), welches zumindest ein Regal (12) mit einer Vielzahl von in einer Längsrichtung (Z) verlaufenden Kanälen (14) aufweist, wobei der Shuttle-Bahnhof (30") einen Hubtisch (100) und ein Gestell (32) aufweist, welches ausgebildet ist, einen Hubtisch (100) in einer Regalstellung des Shuttle-Bahnhofs (30"), in der der Shuttle-Bahnhof (30") in ein Ende eines Kanals (14) eingeschoben oder eingehängt ist, derart zu tragen, dass das Shuttle (22) frei zwischen dem Shuttle-Bahnhof (30") und einer restlichen Tiefe eines Kanals (14) hin- und herfahren kann, wobei der Hubtisch (100) ausgebildet ist, das Gestell (32) zu tragen, wenn sich der Shuttle-Bahnhof (30") in einer Transportstellung befindet, in der der Hubtisch relativ zum Gestell (32) angehoben ist, so dass das Shuttle (22) auf dem Hubtisch (100) sitzt, wobei der Hubtisch (100) aus der Regalstellung gegenüber dem Gestell (32) vertikal mit einem Lastaufnahmemittel eines Regalbediengeräts (20) in die Transportstellung hebbar ist, und wobei der Hubtisch (100) ausgebildet ist, in der Regalstellung auf dem Gestell (32) zu ruhen und wobei das Gestell (32) ausgebildet ist, in der Transportstellung auf dem Hubtisch (100) zu ruhen.

2. Shuttle-Bahnhof (30") nach Anspruch 1, wobei der Hubtisch (100) mindestens einen Längsträger (120; 122) und mindestens einen Querträger (124; 126, 126') aufweist.

3. Shuttle-Bahnhof (30") nach Anspruch 2, wobei vorzugsweise jeder Querträger (124; 126, 126') mindestens ein Sicherungselement (128), vorzugsweise in Form eines Stifts oder Dom (130), aufweist, welches in der Transportstellung in Eingriff mit einer Sicherungsöffnung im Shuttle (22) ist und welches in der Ruhestellung außer Eingriff mit dem Shuttle (22) ist.

4. Shuttle-Bahnhof (30") nach Anspruch 3, wobei das Sicherungselement im Wesentlichen senkrecht aus einer Oberfläche des Querträgers (124; 126, 126') hervorsteht, vorzugsweise in Hubrichtung.

5. Shuttle-Bahnhof (30") nach einem der Ansprüche 1 bis 4, wobei das Gestell (32) zwei seitlich angeordnete Regalauflageabschnitte (102, 104) und einen dazwischen angeordneten Hubtisch-Lagerabschnitt (106) aufweist.

6. Shuttle-Bahnhof (30") nach Anspruch 5, wobei der Hubtisch-Lagerabschnitt (106) mindestens einen, im Querschnitt vorzugsweise U-förmigen und nach unten offenen, sich in Längsrichtung (Z) erstreckenden Aufnahmezinken (108, 110) aufweist, wobei jeder Aufnahmezinken (108, 110) eine Höhe aufweist, die größer als ein maximaler Hub zwischen dem Gestell (32) und dem Hubtisch (100) ist.

7. Shuttle-Bahnhof (30") nach Anspruch 6, wobei jeder Aufnahmezinken (108, 110) mindestens eine Öffnung (112 - 118) aufweist, durch die der Hubtisch (100) derart durchgreifen kann, dass das Shuttle (22) in der Transportstellung, vorzugsweise allein, auf dem Hubtisch (100) ruht.

8. Shuttle-Kanallager mit einem Shuttle-Bahnhof (30") nach einem der Ansprüche 1 bis 7 und einem Regal (12).

9. Verfahren zum Bereitstellen eines Shuttles (20) in verschiedenen Kanälen (14) eines Shuttle-Kanallagers (10) mit folgenden Schritten:
- Verfahren eines Shuttles (22) in einen Shuttle-Bahnhof (30"), der gemäß einem der Ansprüche 1 bis 7 ausgebildet ist;
- Abkoppeln des mit dem Shuttle (22) bestückten Shuttle-Bahnhofs (30") von einem Übergabeplatz (68) eines ersten Kanals (14) eines Regals (12), vorzugsweise durch Ausheben des Bahnhofs (30") mittels eines Regalbediengeräts oder eines Staplers (20);
- Umsetzen des mit dem Shuttle (22) bestückten Shuttle-Bahnhofs (30") mittels dem Regalbediengerät oder dem Stapler (20) in einen Übergabeplatz (68) eines anderen Kanals (14).

10. Verfahren nach Anspruch 9, wobei das Shuttle (22) durch ein Absenken des Hubtischs (100) relativ zum Gestell (32) freigegeben wird, um in einem Kanal (14) hin- und herzufahren, und durch ein Anheben des Hubtischs (100) gegenüber dem Gestell (32) an einer Bewegung entlang des Kanals (14) gehindert ist.

## Claims

1. Shuttle-docking station (30") for a shuttle (22) in a shuttle-channel warehouse (10), which comprises at least one rack (12) having a plurality of channels (14) extending in a longitudinal direction (Z), wherein the shuttle-docking station (30") comprises a lifting platform (100) and a frame (32), which is formed to carry the lifting platform (100), in a rack position of the shuttle-docking station (30"), where the shuttle-docking station (30") is inserted or hung into an end of one of the channels (14) such that the shuttle (22) can travel freely between the shuttle-docking station (30") and a remaining depth of the one of the channels (14), wherein the lifting platform (100) is formed for carrying the frame (32) if the shuttle-docking station (30") is in a transportation position in which the lifting platform is lifted relative to the frame (32) so that the shuttle (22) sits on the lifting platform (100), wherein the lifting platform (100) can be lifted from the rack position relative to the rack (32) vertically by means of a load-handling device of a storage and retrieval device (20) into the transportation position, and wherein the lifting platform (100) is formed to rest in the rack position on the frame (32) and wherein the frame (32) is formed to rest on the lifting platform (100) in the transportation position.

2. Shuttle-docking station (30") of claim 1, wherein the lifting platform (100) comprises at least one longitudinal beam (120; 122) and at least one transversal beam (124; 126, 126').

3. Shuttle-docking station (30") of claim 2, wherein preferably each of the transversal beams (124; 126, 126') comprises at least one securing element (128), preferably in terms of a pin or tang (130), which is engaging, in the transportation position, a securing opening in the shuttle (22) and which is not in engagement with the shuttle (22) in the rest position.

4. Shuttle-docking station (30") of claim 3, wherein the securing element protrudes substantially perpendicular from a surface of the transversal beam (124; 126, 126'), preferably along a lifting direction.

5. Shuttle-docking station (30") of any of the claims 1 - 4, wherein the frame (32) comprises two laterally arranged rack support portions (102, 104) and a liftingplatform support portion (106) arranged therebetween.

6. Shuttle-docking station (30") of claim 5, wherein the lifting-platform support portion (106) comprises at least one receiving prong (108, 110) extending in the longitudinal direction (Z), which has in a sectional view preferably a U-like shape and is open downwardly, wherein each of the receiving prongs (108, 110) comprises a height which is greater than a maximum lift between the frame (32) and the lifting platform (100).

7. Shuttle-docking station (30") of claim 6, wherein each of the receiving prongs (108, 110) comprises at least one opening (112 - 118) through which the lifting platform (100) can reach such that the shuttle (22) rests, preferably alone, on the lifting platform (100) in the transportation position.

8. Shuttle-channel warehouse comprising a shuttle-docking station (30") of any of the claims 1 - 7, and a rack (12).

9. A method for providing a shuttle (20) in different channels (14) of a shuttle-channel warehouse (10) comprising the steps of:
- displacing a shuttle (22) within a shuttle-docking station (30") being formed in accordance with one of the claims 1 - 7;
- decoupling the shuttle-docking station (30"), which is equipped with the shuttle (22), from a transfer location (68) of a first channel (14) of a rack (12), preferably by lifting the station (30") by means of a storage and retrieval device or a fork lift (20);
- transferring the shuttle-docking station (30") equipped with the shuttle (22) by means of the storage and retrieval device or the fork lift (20) into a transfer location (68) of a different channel (14).

10. Method of claim 9, wherein the shuttle (22) is released by lowering the lifting platform (100) relative to the frame (22) for traveling back and forth within a channel (14), and is prevented from moving along the channel (14) by lifting the lifting platform (100) relative to the frame (32).

## Revendications

1. Station de navettes (30") pour une navette (22) dans un magasin de stockage à navettes (10), qui présente au moins une étagère (12) avec une pluralité de canaux (14) passant dans un sens longitudinal (Z), sachant que la station de navettes (30") présente une table de levage (100) et un bâti (32) qui est conçu pour porter une table de levage (100) dans une position d'étagère de la station de navettes (30") dans laquelle la station de navettes (30") est entrée ou accrochée dans une extrémité du canal (14), de telle sorte que la navette (22) puisse effectuer un va-et-vient librement entre la station de navettes (30") et une profondeur restante d'un canal (14), sachant que la table de levage (100) est conçue pour porter le bâti (32) lorsque la station de navettes (30") se trouve dans une position de transport dans laquelle la table de levage est soulevée par rapport au bâti (32), de sorte que la navette (22) repose sur la table de levage (100), sachant que la table de levage (100) peut être levée dans la position de transport depuis la position d'étagère par rapport au bâti (32), verticalement avec un moyen de réception de charge d'un pupitre de commande d'étagères (20), et sachant que la table de levage (100) est conçue pour reposer sur le bâti (32) dans la position d'étagère et sachant que le bâti (32) est conçu pour reposer sur la table de levage (100) dans la position de transport.

2. Station de navettes (30") selon la revendication 1, dans laquelle la table de levage (100) présente au moins un support longitudinal (120 ; 122) et au moins un support transversal (124 ; 126, 126').

3. Station de navettes (30") selon la revendication 2, dans laquelle chaque support transversal (124 ; 126, 126') présente de préférence au moins un élément de fixation (128), de préférence sous forme d'une tige ou d'une broche (130), qui est en prise avec une ouverture de fixation dans la navette (22) dans la position de transport et qui n'est plus en prise avec la navette (22) dans la position de repos.

4. Station de navettes (30") selon la revendication 3, dans laquelle l'élément de fixation fait saillie essentiellement verticalement d'une surface du support transversal (124 ; 126, 126'), de préférence dans le sens de levage.

5. Station de navettes (30") selon l'une des revendications 1 à 4, dans laquelle le bâti (32) présente deux tronçons d'appui d'étagère (102, 104) disposés latéralement et un tronçon de magasin de table de levage (106) disposé entre celles-ci.

6. Station de navettes (30") selon la revendication 5, dans laquelle le tronçon de magasin de table de levage (106) présente au moins une lame de réception (108, 110) à section transversale en U de préférence et ouverte vers le bas, s'étendant dans le sens longitudinal (Z), sachant que chaque lame de réception (108, 110) présente une hauteur qui est supérieure à une levée maximale entre le bâti (32) et la table de levage (100).

7. Station de navettes (30") selon la revendication 6, dans laquelle chaque lame de réception (108, 110) présente au moins une ouverture (112 - 118) à travers laquelle la table de levage (100) peut pénétrer de telle façon que la navette (22) repose, de préférence seule, sur la table de levage (100) dans la position de transport.

8. Magasin de stockage à navettes comprenant une station de navettes (30") selon l'une des revendications 1 à 7 et une étagère (12).

9. Procédé de préparation d'une navette (20) dans différents canaux (14) d'un magasin de stockage à navettes (10) comprenant les étapes suivantes :
- déplacement d'une navette (22) dans une station de navettes (30") conçue selon l'une des revendications 1 à 7 ;
- désaccouplement de la station de navettes (30") équipée de la navette (22) d'un emplacement de transfert (68) d'un premier canal (14) d'une étagère (12), de préférence par soulèvement de la station de navettes (30") au moyen d'un pupitre de commande d'étagères ou d'un chariot élévateur (20) ;
- déplacement de la station de navettes (30") équipée de la navette (22) au moyen du pupitre de commande d'étagères ou du chariot élévateur (20) dans un emplacement de transfert (68) d'un autre canal (14).

10. Procédé selon la revendication 9, dans lequel la navette (22) est libérée par un abaissement de la table de levage (100) par rapport au bâti (32) pour effectuer un va-et-vient dans un canal (14) et, par un soulèvement de la table de levage (100) par rapport au bâti (32), est empêchée d'effectuer un mouvement le long du canal (14).
